# EUROPÄISCHE PATENTSCHRIFT

(11) **EP 2 912 712 B1**
(45) Veröffentlichungstag und Bekanntmachung des Hinweises auf die Patenterteilung: **19.07.2017**
(21) Anmeldenummer: 13779233.9
(22) Anmeldetag: 18.10.2013
(51) Int. Cl.: H01M 8/0273, H01M 8/0284, H01M 8/1007, H01M 8/0286, H01M 8/1018

(54) **MEMBRAN-ELEKTRODEN-ANORDNUNG, BRENNSTOFFZELLE MIT EINER SOLCHEN UND KRAFTFAHRZEUG MIT DER BRENNSTOFFZELLE**
MEMBRANE ELECTRODE ASSEMBLY, FUEL CELL COMPRISING ASSEMBLY OF THIS TYPE AND MOTOR VEHICLE COMPRISING SAID FUEL CELL
ASSEMBLAGE MEMBRANE-ÉLECTRODES, PILE À COMBUSTIBLE POURVUE D'UN TEL ASSEMBLAGE ET VÉHICULE À MOTEUR ÉQUIPÉ DE LADITE PILE À COMBUSTIBLE

(30) Priorität: 25.10.2012 DE 102012020975
(43) Veröffentlichungstag der Anmeldung: 02.09.2015
(73) Patentinhaber: Volkswagen Aktiengesellschaft, 38440 Wolfsburg (DE)
(72) Erfinder: ANDREAS-SCHOTT, Benno, 38524 Triangel (DE)
(74) Vertreter: Gulde & Partner
(86) Internationale Anmeldenummer: PCT/EP2013/071862
(87) Internationale Veröffentlichungsnummer: WO 2014/064010

(56) Entgegenhaltungen:
- US-A1- 2007 264 557
- US-A1- 2008 305 384
- US-A1- 2011 318 667

## Beschreibung

Die Erfindung betrifft eine Membran-Elektroden-Anordnung für eine Brennstoffzelle, umfassend eine Membran-Elektronen-Einheit und eine Dichtung. Zudem betrifft die Erfindung eine Brennstoffzelle umfassend eine Mehrzahl erfindungsgemäßer Membran-Elektroden-Anordnungen und ein Kraftfahrzeug mit einer solchen Brennstoffzelle.

Brennstoffzellen nutzen die chemische Umsetzung eines Brennstoffs mit Sauerstoff zu Wasser, um elektrische Energie zu erzeugen. Hierfür enthalten Brennstoffzellen als Kernkomponente die so genannte Membran-Elektroden-Einheit (MEA für membrane electrode assembly), die ein Verbund aus einer ionenleitenden Membran und jeweils einer, beidseitig an der Membran angeordneten Elektrode (Anode und Kathode) ist. Zudem können Gasdiffusionslagen (GDL) beidseitig der Membran-Elektroden-Einheit an den, der Membran abgewandten Seiten der Elektroden angeordnet sein. In der Regel wird die Brennstoffzelle durch eine Vielzahl, im Stapel (stack) angeordneter MEAs gebildet, deren elektrische Leistungen sich addieren. Im Betrieb der Brennstoffzelle wird der Brennstoff, insbesondere Wasserstoff H₂ oder ein wasserstoffhaltiges Gasgemisch, der Anode zugeführt, wo eine elektrochemische Oxidation von H₂ zu H⁺ unter Abgabe von Elektronen stattfindet. Über den Elektrolyten oder die Membran, welche die Reaktionsräume gasdicht voneinander trennt und elektrisch isoliert, erfolgt ein (wassergebundener oder wasserfreier) Transport der Protonen H⁺ aus dem Anodenraum in den Kathodenraum. Die an der Anode bereitgestellten Elektronen werden über eine elektrische Leitung der Kathode zugeleitet. Der Kathode wird Sauerstoff oder ein sauerstoffhaltiges Gasgemisch zugeführt, sodass eine Reduktion von O₂ zu O²⁻ unter Aufnahme der Elektronen stattfindet. Gleichzeitig reagieren im Kathodenraum diese Sauerstoffanionen mit den, über die Membran transportierten Protonen unter Bildung von Wasser. Durch die direkte Umsetzung von chemischer in elektrische Energie erzielen Brennstoffzellen gegenüber anderen Elektrizitätsgeneratoren aufgrund der Umgehung des Carnot-Faktors einen verbesserten Wirkungsgrad.

Die derzeit am weitesten entwickelte Brennstoffzellentechnologie basiert auf Polymerelektrolytmembranen (PEM), bei denen die Membran selbst aus einem Polymerelektrolyt besteht. Hierbei werden oft säuremodifizierte Polymere, insbesondere perfluorierte Polymere, eingesetzt. Der am weitesten verbreitete Vertreter dieser Klasse von Polymerelektrolyten ist eine Membran aus einem sulfonierten Polytetrafluorethylen-Copolymer (Handelsname: Nafion; Copolymer aus Tetrafluorethylen und einem Sulfonylsäurefluorid-Derivat eines Perfluoralkylvinylethers). Die elektrolytische Leitung findet dabei über hydratisierte Protonen statt, weshalb für die Protonenleitfähigkeit das Vorhandensein von Wasser Bedingung ist und im Betrieb der PEM-Brennstoffzelle ein Anfeuchten der Betriebsgase erforderlich ist. Aufgrund der Notwendigkeit des Wassers ist die maximale Betriebstemperatur dieser Brennstoffzellen bei Normdruck auf unter 100 °C beschränkt. In Abgrenzung von Hochtemperatur-Polymerelektrolytmembran-Brennstoffzellen (HT-PEM-Brennstoffzellen), deren elektrolytische Leitfähigkeit auf einen durch elektrostatische Komplexbindung an ein Polymergerüst der Polymerelektrolytmembran gebundenen Elektrolyten beruht (beispielsweise Phosphorsäure-dotierte Polybenzimidazol(PBI)-Membrane) und die bei Temperaturen von 160 °C betrieben werden, wird dieser Brennstoffzellentyp auch als Niedertemperatur-Polymerelektrolytmembran-Brennstoffzelle (NT-PEM-Brennstoffzelle) bezeichnet.

Wie einleitend erwähnt, wird die Brennstoffzelle durch eine Vielzahl, im Stapel angeordneter Einzelzellen gebildet, sodass von einem Brennstoffzellenstapel gesprochen wird. Zwischen den Membran-Elektroden-Einheiten sind in der Regel so genannte Bipolarplatten angeordnet, welche eine Versorgung der Einzelzellen mit den Betriebsmedien, also den Reaktanten und üblicherweise auch einer Kühlflüssigkeit sicherstellen. Zudem sorgen die Bipolarplatten für einen elektrisch leitfähigen Kontakt zu den Membran-Elektroden-Einheiten.

Zwischen den Membran-Elektroden-Einheiten und den Bipolarplatten sind Dichtungen angeordnet, welche die Anoden- und Kathodenräume nach außen abdichten und ein Austreten der Betriebsmedien aus dem Brennstoffzellenstapel verhindern. Die Dichtungen können seitens der Membran-Elektroden-Einheiten und/oder der Bipolarplatten vorgesehen sein und insbesondere mit diesen Komponenten verbunden sein.

Zu diesem Zweck kann die Dichtung ein- oder beidseitig auf die Bipolarplatte aufvulkanisiert sein. Ferner kann die Dichtung in Form einer Dichtraupe auf der Bipolarplatte mittels eines Roboters aufgetragen werden. Die mit dem Roboter aufgetragene Dichtung kann erhebliche Toleranzen aufweisen, welche zu Leckagen führen können. Diesem Problem wurde bisher z. B. durch eine Prozessoptimierung des Auftragens der Dichtraupe mit dem Roboter entgegengewirkt.

Ferner kann die Membran zwischen zwei mit einem Kleber beschichteten Folien (Randverstärkungsfolien) laminiert werden. Danach können Dichtungen an die Membran-Elektroden-Einheiten angespritzt bzw. die Membran-Elektroden-Einheiten umspritzt werden. Die maximale Temperatur wird dabei jedoch durch die Membran-Elektroden-Einheit bestimmt und liegt bei ca. 120° C. Diese Temperaturbegrenzung spielt bei den Prozesszeiten für das Vernetzen des Elastomers der Dichtung eine Rolle und resultiert in hohen Kosten wegen langen Prozesszeiten, sowie einer großen Anzahl an Ausschüssen. Die dadurch entstehenden Ausschusskosten sind auf eine fehlerhafte Umspritzung der Membran-Elektroden-Einheit sowie auch das Handling dieses äußerst empfindlichen Bauteils in einem Stanz- und Spritzgussprozess zurückzuführen.

Die DE 10 2009 003 947 A1 offenbart eine UEA (unitized electrode assembly) umfassend eine MEA mit einer Elektrolytmembran, welche sich nicht wesentlich über einen aktiven Bereich der MEA hinaus erstrecken. Ein Sperrfilm ist zwischen einer, um einen chemisch aktiven Bereich umlaufenden Dichtung der UEA und dem chemisch aktiven Bereich angeordnet. Der Sperrfilm kann die MEA außerhalb des aktiven Bereichs überlappen. Ferner kann der Sperrfilm als Träger für die Dichtung dienen und insbesondere mit dieser einteilig ausgeführt sein. Die MEA kann mit dem Sperrfilm mittels eines chemischen Klebstoffs gekoppelt sein. Zudem kann je nach Verbindungskonfiguration ein Verbindungsfilm ein Ende der Elektrolytmembran abdecken.

Die WO 2010/114139 beschreibt ein Herstellungsverfahren für eine Brennstoffzelle und für Brennstoffzellenmodule der Brennstoffzelle. Die Brennstoffzelle umfasst Elektrodeneinheiten, welche je eine MEA, und anodenseitig und kathodenseitig der MEA je eine poröse Schicht umfassen. Die MEA umfasst wiederum eine Elektrolyt-Membran und eine katalytische Anoden- und Kathodenschicht. Die poröse Schicht umfasst jeweils eine, der MEA zugewandte Gasdiffusionslage (aus Karbon-Papier) und eine Gasflusswegelage (aus gesintertem Metallschaum). Zwischen den Elektrodeneinheiten sind Separatoren (entsprechend Bipolarplatten) angeordnet, welche jeweils drei Stahlschichten umfassen. Zwischen den Separatoren und diese kontaktierend sind rahmenförmige Dichtungen angeordnet, welche die Elektrodeneinheiten umschließen.

Bei der Herstellung werden zunächst eine erste Einheit umfassend einen Separator und einen äußeren Rahmen der rahmenförmigen Dichtung und eine zweite Einheit umfassend die Elektrodeneinheit und einen inneren Rahmen der rahmenförmigen Dichtung gebildet. Anschließend wird der innere Rahmen mitsamt der Elektrodeneinheit in die äußere Dichtung eingesetzt. Als weitere Variante kann auch die Elektrodeneinheit in eine Einheit umfassend den Separator und die rahmenförmige Dichtung direkt eingesetzt werden.

Die WO 2010/114140 A1 offenbart ein Herstellungsverfahren für eine Zellenanordnung einer Brennstoffzelle. Der Aufbau der Brennstoffzelle ist im Wesentlichen analog dem Aufbau der WO 2010/114139. Bei der Herstellung werden zunächst die Elektrodeneinheit, der Separator und eine Dichtungs-Vorform, welche eine Rahmenform aufweist, hergestellt. Die Elektrodeneinheit, der Separator und die Dichtungs-Vorform werden in einem Ausformwerkzeug, welches eine Pressvorrichtung umfasst, angeordnet. Mittels Druck und Wärme werden die einzelnen Teile in dem Ausformwerkzeug miteinander verbunden.

Ferner wird auf US 2007/0264557 A1 und US 2008/0305384 A1 verwiesen, welche weitere Membran-Elektroden-Anordnungen offenbaren.

Der Erfindung liegt nun die Aufgabe zugrunde, eine Membran-Elektroden-Anordnung zu schaffen, welche einfacher hergestellt werden kann.

Diese Aufgabe wird durch eine Membran-Elektroden-Anordnung mit den Merkmalen des Anspruchs 1 gelöst. Weitere bevorzugte Ausgestaltungen der Erfindung ergeben sich aus den übrigen, in den Unteransprüchen genannten Merkmalen.

Die erfindungsgemäße Membran-Elektroden-Anordnung für eine Brennstoffzelle umfasst eine Membran-Elektroden-Einheit mit einer Membran und mit zwei, die Membran beidseitig flächig kontaktierenden Elektroden. Zudem umfasst die Membran-Elektroden-Anordnung einen, die Membran umlaufend umschließenden und mit dieser überlappenden Dichtungsträger. Ferner umfasst die Membran-Elektroden-Anordnung eine Verbindungslage, welche mit der Membran und mit dem Dichtungsträger umlaufend überlappt, wobei auf derselben Flachseite der Verbindungslage ein innerer Randabschnitt der Verbindungslage mit der Membran-Elektroden-Einheit und ein äußerer Randabschnitt der Verbindungslage mit dem Dichtungsträger stoffschlüssig verbunden ist. Die Membran-Elektroden-Anordnung umfasst zudem eine, außerhalb der Membran mit dem Dichtungsträger verbundene Dichtung. Kennzeichnend ist vorgesehen, dass die stoffschlüssige Verbindung eine Klebung ist, wobei die Verbindungslage mit einem Klebstoff beschichtet ist.

Die Membran ist typischerweise eine protonenleitende Membran (Polymerelektrolytmembran). Die Elektroden bilden eine Anode und eine Kathode aus und können beidseitig auf die Membran beschichtet sein.

Der innere Randabschnitt der Verbindungslage ist typischerweise mit der Membran und/oder einer Elektrode der Membran-Elektroden-Einheit stoffschlüssig verbunden.

Als "Flachseiten" werden bei flachen Elementen jene Seiten (Flächen) bezeichnet, deren Ausdehnungen verglichen mit anderen Seiten der Elemente wesentlich größer sind.

Die Verbindungslage stellt durch die stoffschlüssige Verbindung typischerweise um einen chemisch aktiven Bereich der Membran-Elektroden-Einheit umlaufende Dichtflächen zum Dichtungsträger und zur Membran-Elektroden-Einheit her. Dadurch wird ein unerwünschter Übertritt von Betriebsmedien zwischen den beiden Seiten der Membran verhindert. Zudem ist durch die stoffschlüssige Verbindung eine ausreichende Stabilität der Membran-Elektroden-Anordnung sichergestellt. Der chemisch aktive Bereich ist jener Bereich der Membran-Elektroden-Einheit, welcher im Betrieb mit Reaktanten beaufschlagt wird. Die Verbindungslage ist typischerweise eine Folie, insbesondere eine Kunststofffolie.

Die Dichtung ist typischerweise die Membran umlaufend umschließend ausgebildet. Dadurch ist auch der chemisch aktive Bereich der Membran-Elektroden-Einheit von der Dichtung umlaufend umschlossen. Dadurch, dass die Dichtung den chemisch aktiven Bereich umschließt, werden Reaktanten und Reaktionsprodukte daran gehindert, aus einer Brennstoffzelle, welche die Membran-Elektroden-Anordnung umfasst, auszutreten. Somit sind auch die Elektroden der Membran-Elektroden-Einheit innerhalb des von der Dichtung umlaufend umschlossenen, chemisch aktiven Bereichs angeordnet.

Vorzugsweise ist die Dichtung stoffschlüssig mit dem Dichtungsträger verbunden. Dies ist typischerweise durch ein Anspritzen der Dichtung an den Dichtungsträger zum Beispiel unter teilweisem Anschmelzen der betroffenen Materialien realisierbar.

Üblicherweise ist die Dichtung außerhalb der Verbindungslage mit dem Dichtungsträger verbunden.

Ferner erstreckt sich die Dichtung üblicherweise beidseitig, insbesondere in zwei Teilabschnitten entlang dem Dichtungsträger. Die beiden Teilabschnitte erstrecken sich beidseitig des Dichtungsträgers, indem sich der erste Teilabschnitt entlang einer ersten Flachseite des Dichtungsträgers und der zweite Teilabschnitt entlang einer zweiten Flachseite des Dichtungsträgers erstreckt.

Die beiden Teilabschnitte weisen Dichtflächen auf, wobei die Dichtflächen des ersten Teilabschnitts und des zweiten Teilabschnitts bevorzugt im Wesentlichen deckungsgleiche Normalprojektionsbereiche auf dem Dichtungsträger abbilden. Mit "Dichtflächen" sind jene Flächen gemeint, welche dazu ausgebildet sind, an einer Gegenfläche z. B. einer Bipolarplatte anzuliegen und zu dichten. Insbesondere bevorzugt sind die Dichtflächen bezüglich dem Dichtungsträger (beziehungsweise einer in diesem liegenden Ebene) spiegelsymmetrisch ausgebildet.

Bevorzugt weist die Dichtung je Teilabschnitt zwei Dichtlippen auf, die durch eine entsprechende Profilierung der Dichtung gebildet werden. Dadurch bilden sich zwei voneinander unabhängige Dichtungslinien, also real zwei Dichtbereiche, welche eine doppelte Sicherheit gegen Leckage bewirken. Typischerweise laufen die zwei Dichtlippen rings um einen abgedichteten Bereich.

Vorzugsweise ist der Dichtungsträger eine Dichtungsträgerfolie aus einem Kunststoff. Insbesondere ist die Dichtungsträgerfolie eine PEN-Folie (Polyethylennaphthalat) oder die Dichtungsträgerfolie umfasst PEN.

Bevorzugt weist der Dichtungsträger zumindest eine Öffnung zur Durchführung von Betriebsmedien auf, welche typischerweise von der Dichtung umlaufend umschlossen ist. Öffnungen zur Durchführung von Betriebsmedien dienen zur Versorgung der Membran-Elektroden-Einheit mit Betriebsmedien. Dadurch kann der Brennstoffzellenstapel kompakt und platzsparend mit den Betriebsmedien versorgt werden. Die Betriebsmedien umfassen Reaktanten, also Brennstoff (z. B. Wasserstoff) und Oxidationsmittel (z. B. Sauerstoff oder Luft) sowie Kühlmedien, insbesondere Kühlflüssigkeit. Ferner können Reaktionsprodukte (z. B. Wasser) über Öffnungen abgeführt werden.

Die Membran-Elektroden-Anordnung kann Gasdiffusionslagen (GDL) umfassen, welche innerhalb des, von der Dichtung umschlossenen, chemisch aktiven Bereichs angeordnet sind. Die Elektroden können mit den Gasdiffusionslagen zu so genannten Gasdiffusionselektroden verbunden sein.

Bevorzugt ist die Verbindungslage auf einer, dem Dichtungsträger gegenüberliegenden Flachseite der Membran angeordnet. Dadurch befindet sich die Membran (typischerweise die gesamte Membran-Elektroden-Einheit) geschützt zwischen der Verbindungslage und dem Folienträger.

Die stoffschlüssige Verbindung ist eine Klebung. Klebungen sind leicht und kostengünstig herzustellen. Die Klebung kann sowohl eine drucksensitive Klebung (z. B. mittels eines Adhäsionsklebers) als auch eine thermisch aktivierbare Klebung und/oder eine Klebung mit einem Heißkleber sein.

Die Verbindungslage ist mit einem Klebstoff beschichtet, insbesondere ist die Verbindungslage eine selbstklebende Folie. Durch diese Ausgestaltung erfolgt auf eine besonders einfache Art und Weise ein Verbinden der Membran-Elektroden-Einheit und somit der Membran mit dem Dichtungsträger. So wird die Verbindungslage, insbesondere die selbstklebende Folie einfach auf die Membran-Elektroden-Einheit und auf den Dichtungsträger geklebt, welche sich dabei überlappen.

Bevorzugt endet ein innerer Rand der Verbindungslage gegenüber einem inneren Rand des Dichtungsträgers mit einem Versatz. Insbesondere steht der innere Rand der Verbindungslage (in Richtung des chemisch aktiven Bereichs also typischerweise in Richtung der Mitte der Membran) über den inneren Rand des Dichtungsträgers. Durch diese Ausgestaltung wird eine gleichmäßiger verlaufende Dicke der Membran-Elektroden-Anordnung bewirkt und eine Scherwirkung auf die Membran zwischen dem Dichtungsträger und der Verbindungslage verhindert oder zumindest vermindert.

Vorzugsweise weist der Dichtungsträger eine Perforation auf, entlang welcher sich die Dichtung beidseitig des Dichtungsträgers erstreckt. Ein erster Teilabschnitt der Dichtung ist auf einer ersten Flachseite und ein zweiter Teilabschnitt auf einer zweiten Flachseite des Dichtungsträgers angeordnet. Die beiden Teilabschnitte sind durch die Perforation hindurch einstückig miteinander verbunden. Dadurch ist die Dichtung formschlüssig mit dem Dichtungsträger verbunden. Typischerweise wird durch die Perforation und die, durch die Perforation verlaufende Dichtung eine Vielzahl an formschlüssigen Verbindungsstellen zur Verfügung gestellt. Bevorzugt umfassen Normalprojektionen der beiden Teilabschnitte auf den Dichtungsträger einen deckungsgleichen Bereich, wobei der Dichtungsträger innerhalb des deckungsgleichen Bereichs die Perforation aufweist. Die Perforation umfasst durch den Dichtungsträger durchgehende Ausnehmungen in beliebiger Form, z. B. kreisrund, in beliebiger Anordnung, also in regelmäßigen oder unregelmäßigen Abständen, und in beliebiger Anzahl, wenigstens jedoch eine Ausnehmung.

Ferner wird eine Brennstoffzelle zur Verfügung gestellt. Die Brennstoffzelle umfasst eine Mehrzahl abwechselnd gestapelter Bipolarplatten und erfindungsgemäßer Membran-Elektroden-Anordnungen. Typischerweise dichtet die Dichtung, insbesondere deren Teilabschnitte Räume zwischen den Membran-Elektroden-Einheiten und den Bipolarplatten ab.

Des Weiteren wird ein Kraftfahrzeug umfassend die erfindungsgemäße Brennstoffzelle zur Verfügung gestellt. Die Brennstoffzelle dient vorzugsweise zur Versorgung des Kraftfahrzeugs mit elektrischem Strom. Insbesondere ist die Brennstoffzelle zur Stromversorgung eines elektrischen Antriebs des Kraftfahrzeugs vorgesehen.

Ferner wird ein Verfahren zur Herstellung einer erfindungsgemäßen Membran-Elektroden-Anordnung zur Verfügung gestellt. Das Verfahren umfasst einen Schritt des Herstellens der Dichtung im Bereich des Dichtungsträgers und einen anschließenden Schritt des stoffschlüssigen Verbindens des inneren Randabschnitts der Verbindungslage mit der Membran-Elektroden-Einheit und des äußeren Randabschnitts der Verbindungslage mit dem Dichtungsträger.

Der innere Randabschnitt der Verbindungslage wird typischerweise mit der Membran und/oder den Elektroden der Membran-Elektroden-Einheit stoffschlüssig verbunden.

Typischerweise erfolgt vor dem stoffschlüssigen Verbinden ein Zusammenfügen des Dichtungsträgers und der Membran, also typischerweise ein Zusammenfügen des Dichtungsträgers und der gesamten Membran-Elektroden-Einheit.

Vorzugsweise ist das Herstellen der Dichtung mittels Anspritzens der Dichtung an den Dichtungsträger realisiert. Dies erfolgt mittels eines Anspritzens eines (Ausgangs-)Materials der Dichtung. Typischerweise erfolgt anschließend ein Schritt des Vernetzens des (Ausgangs-)Materials. Durch diese Ausgestaltung erfolgt typischerweise eine dichte Verbindung zwischen der Dichtung und dem Dichtungsträger.

Im Gegensatz zum Umspritzen einer Membran-Elektroden-Einheit (MEA) wird erfindungsgemäß die Dichtung lediglich an den Dichtungsträger ohne Membran-Elektroden-Einheit gespritzt, bzw. der Dichtungsträger mit der Dichtung umspritzt. Eine maximal realisierbare Verarbeitungstemperatur hängt somit von dem Dichtungsträger, insbesondere einer dafür verwendeten Folie, und nicht von der Membran-Elektroden-Einheit ab. Die Kosten für Fehlteile reduzieren sich auf die Kosten des Dichtungsträgers und der Dichtung. Im nächsten Schritt wird die relativ empfindliche Membran oder typischerweise die gesamte Membran-Elektroden-Einheit in einem Öffnungsbereich (Fenster) des Dichtungsträgers, welcher später im Wesentlichen den chemisch aktiven Bereich (also eine chemisch aktive Fläche) darstellt, positioniert. Die Verklebung der Membran-Elektroden-Einheit erfolgt üblicherweise durch Auflegen der Verbindungslage (typischerweise ein Rahmen), welche mit einem Kleber (Adhäsionskleber) beschichtet ist. Die Gasdiffusionslagen können nach bekannten Verfahren entweder auflaminiert (also mittels eines kleberlosen Heißpressverfahrens mit der Membran verbunden) oder aufgeklebt werden.

Die Erfindung wird nachfolgend in Ausführungsbeispielen anhand der zugehörigen Zeichnungen erläutert. Es zeigen:
- Figur 1: eine erfindungsgemäße Membran-Elektroden-Anordnung gemäß einer bevorzugten Ausgestaltung der Erfindung,
- Figur 2: eine Explosionsdarstellung der Membran-Elektroden-Anordnung,
- Figur 3: den Dichtungsträger,
- Figur 4: den Dichtungsträger mit der Dichtung,
- Figur 5: den Dichtungsträger mit der Dichtung und der Membran,
- Figur 6: den Dichtungsträger mit der Dichtung, der Membran und der Verbindungslage,
- Figur 7: die Membran-Elektroden-Anordnung mit den Gasdiffusionslagen,
- Figur 8: eine Brennstoffzelle umfassend die Membran-Elektroden-Anordnung, und
- Figur 9: ein Kraftfahrzeug umfassend die Brennstoffzelle.

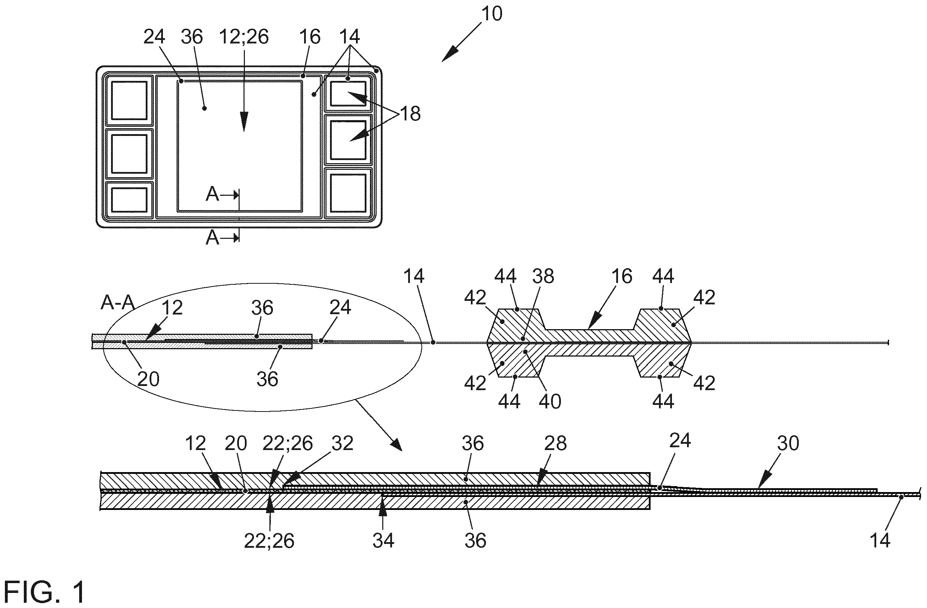

In Figur 1 ist eine erfindungsgemäße Membran-Elektroden-Anordnung 10 gemäß einer bevorzugten Ausgestaltung der Erfindung, in einer Draufsicht, einer Schnittdarstellung (A-A) und einer Detaildarstellung der Schnittdarstellung (A-A) ersichtlich.

Die Membran-Elektroden-Anordnung 10 umfasst eine Membran-Elektroden-Einheit 12 (MEA), einen Dichtungsträger 14 und eine Dichtung 16, welche mit dem Dichtungsträger 14 verbunden ist. Der Dichtungsträger 14 kann Öffnungen 18 zur Durchführung von Betriebsmedien aufweisen.

Die Membran-Elektroden-Einheit 12 (MEA) umfasst eine Membran 20 und beidseitig der Membran 20 angeordnete Elektroden 22 (die Elektroden selbst sind nicht dargestellt, lediglich deren Positionen sind gekennzeichnet). Die Membran-Elektroden-Anordnung 10 bildet einen chemisch aktiven Bereich 26 aus, welcher im Betrieb mit Reaktanten beaufschlagt wird und in welchem die gewünschten Reaktionen stattfinden. Üblicherweise sind beide Flachseiten der Membran 20 komplett von den Elektroden 22 bedeckt. Ferner können sich die Elektroden 22 jedoch auch auf den chemisch aktiven Bereich beschränken und somit die Flachseiten der Membran 20 nur teilweise bedecken.

Wie in der Schnittdarstellung A-A und der dazugehörigen Detaildarstellung ersichtlich, ist die Membran 20 in einem Öffnungsbereich des Dichtungsträgers 14 eingepasst. Die Membran 20, und im Beispiel die gesamte Membran-Elektroden-Einheit 12 überlappt mit dem Dichtungsträger 14 umlaufend und ist mittels einer Verbindungslage 24 mit dem Dichtungsträger 14 verbunden. Dies erfolgt, indem die Dichtungslage 24 stoffschlüssig mit der Membran-Elektroden-Einheit 12, also mit deren Membran 20 und/oder den Elektroden 22 und zudem auch stoffschlüssig mit dem Dichtungsträger 14 verbunden ist. Dazu überlappt die Dichtungslage 24 sowohl die Membran 20 als auch den Dichtungsträger 14 umlaufend. Zur Realisierung der stoffschlüssigen Verbindung kann die Verbindungslage 24 als selbstklebende Folie ausgebildet sein. Diese weist eine, in der Regel einseitige Beschichtung mit einem Klebstoff auf, welche (auf derselben Flachseite der Verbindungslage 24) in einem inneren Randabschnitt 28 die Membran-Elektroden-Einheit 12 und in einem äußeren Randabschnitt 30 den Dichtungsträger 14 kontaktiert. Da sowohl der Dichtungsträger 14, als auch die Verbindungslage 24 eine geschlossen umlaufende Form aufweisen, umschließen diese die Membran 20 und insbesondere den chemisch aktiven Bereich 26. Durch die ebenso geschlossen umlaufende, stoffschlüssige Verbindung zwischen der Verbindungslage 24 und der Membran-Elektroden-Einheit 12, sowie zwischen der Verbindungslage 24 und dem Dichtungsträger 14, sind umlaufend geschlossene Dichtungsbereiche geschaffen, welche im Betrieb einen Übertritt von Reaktanten von einer Seite der Membran 20 auf die andere Seite der Membran 20 verhindern.

Wie ersichtlich ist, kann dabei die Membran-Elektroden-Einheit 12 zwischen dem Dichtungsträger 14 und der Verbindungslage 24 angeordnet sein, sodass die Membran 20 in ihren Randbereichen zwischen dem Dichtungsträger 14 und der Verbindungslage 24 stabilisiert ist. Mit anderen Worten kann die Verbindungslage 24 auf einer, dem Dichtungsträger 14 gegenüberliegenden Flachseite der Membran 20 angeordnet sein.

Zudem kann ein innerer Rand 32 der Verbindungslage 24 gegenüber einem inneren Rand 34 des Dichtungsträgers 14 mit einem Versatz endet, wodurch die mechanische Belastung auf die relativ empfindliche Membran-Elektroden-Einheit 12 verringert wird. Im gezeigten Fall steht der innere Rand 32 der Verbindungslage 24 über den inneren Rand 34 des Dichtungsträgers 14.

An die Membran-Elektroden-Einheit 12 können beidseitig Gasdiffusionslagen 36 anschließen.

Die Dichtung 16 kann einen ersten Teilabschnitt 38 und einen zweiten Teilabschnitt 40 aufweisen, welche sich beidseitig des Dichtungsträgers 14 erstrecken. Die beiden Teilabschnitte 38, 40 können jeweils zwei Dichtlippen 42 ausbilden. Typischerweise weisen die Teilabschnitte Dichtflächen 44 zur Dichtung an einer Bipolarplatte auf. Um dabei eine mechanische Belastung auf den Dichtungsträger 14 zu verringern, können die Dichtflächen 44 bezüglich dem Dichtungsträger 14 spiegelsymmetrisch ausgebildet sein.

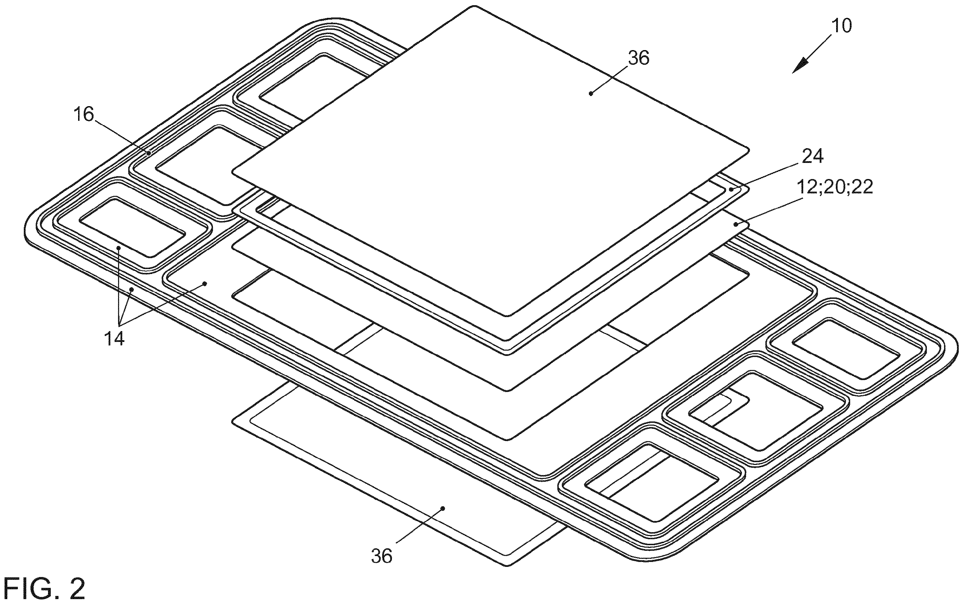

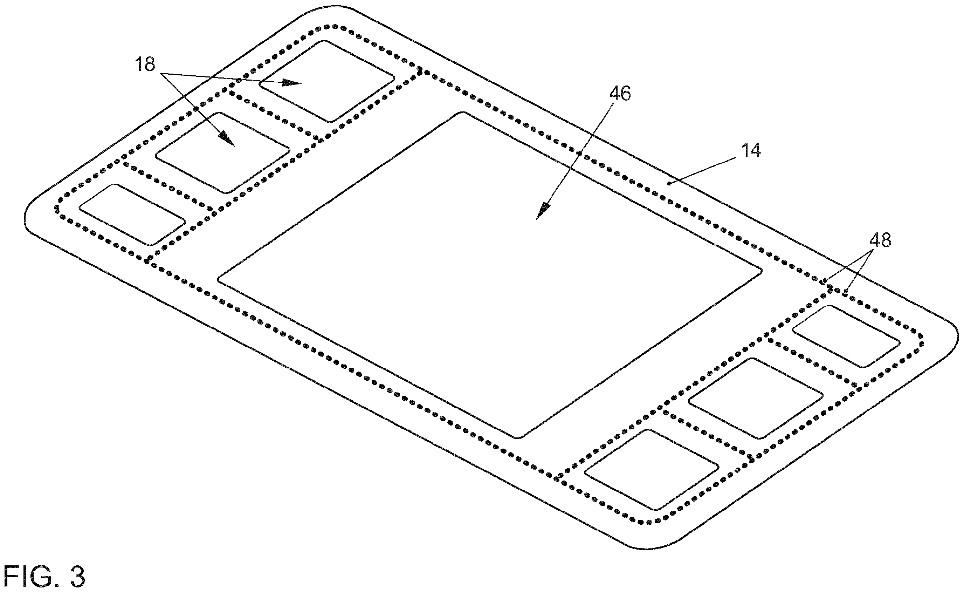

Figur 2 zeigt eine Explosionsdarstellung der bereits aus Figur 1 bekannten Membran-Elektroden-Anordnung 10, welche bereits obenstehend erörtert wurde. Die folgenden Figuren 3 bis 7 zeigen die einzelnen Schritte gemäß einer bevorzugten Abfolge zur Herstellung der Membran-Elektroden-Anordnung 10.

Das Herstellungsverfahren beginnt typischerweise mit dem in Figur 3 gezeigten Dichtungsträger 14 (Randverstärkung bzw. Folienträger). Dieser kann Betriebsmittelöffnungen 18 und einen Öffnungsbereich 46 aufweisen. Zudem kann der Dichtungsträger 14 eine Perforation 48 aufweisen, entlang welcher, im nächsten Herstellungsschritt die Dichtung 16 auf den Dichtungsträger 14 aufgebracht wird. Sowohl die Betriebsmittelöffnungen 18, als auch der Öffnungsbereich 46 und Ausnehmungen der Perforation 48 sind durch den Dichtungsträger 14 durchgehende Ausnehmungen. Diese durchgehenden Ausnehmungen 18, 46, 48 und der Umriss des Dichtungsträgers 14 können üblicherweise mittels Ausstanzens des Dichtungsträgers 14 aus einer Folie (typischerweise eine Kunststofffolie) des Dichtungsträgers geschaffen werden.

Eine Möglichkeit zum Aufbringen der Dichtung 16 auf den Dichtungsträger 14 ist ein Anspritzen der Dichtung 16 an den Dichtungsträger 14. Dies erfolgt innerhalb eines Spritzgusswerkzeugs, indem ein Reaktionsgemisch, umfassend ein zu vernetzendes Polymer oder Monomere und ggf. ein Vernetzungsmittel in das Spritzgusswerkzeug eingespritzt werden. Dank der Perforation 48 kann während des Anspritzvorganges ein Druckausgleich innerhalb des Reaktionsgemischs der beiden Teilabschnitte 38, 40 stattfinden. Dadurch wird einer Verformung des Dichtungsträgers 14, aufgrund möglicher unterschiedlicher Drücke auf beiden Seiten des Dichtungsträgers 14 vorgebeugt. Nach dem Anspritzen erfolgt üblicherweise ein Vernetzungs- und/oder Polymerisationsvorgang, welcher durch ein Erwärmen des Reaktionsgemischs über eine vordefinierte Dauer erfolgt. Dank der Perforation 48 sind die beiden Teilabschnitte 38, 40 durch die Perforation 48 hindurch miteinander einstückig verbunden, wodurch die Dichtung 16 mit dem Dichtungsträger 14 formschlüssig verbunden ist.

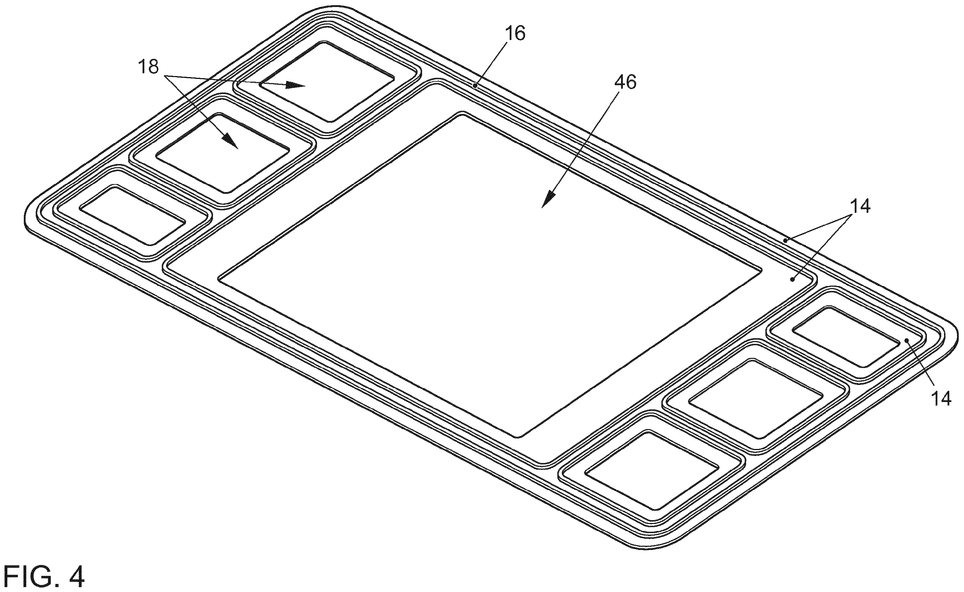

Die Dichtung 16, welche bereits mit dem Dichtungsträger 14 verbunden ist, also typischerweise an diesen angespritzt ist, ist in Figur 4 ersichtlich. Diese Einheit kann auch als ein Foliendichtungsrahmen bezeichnet werden.

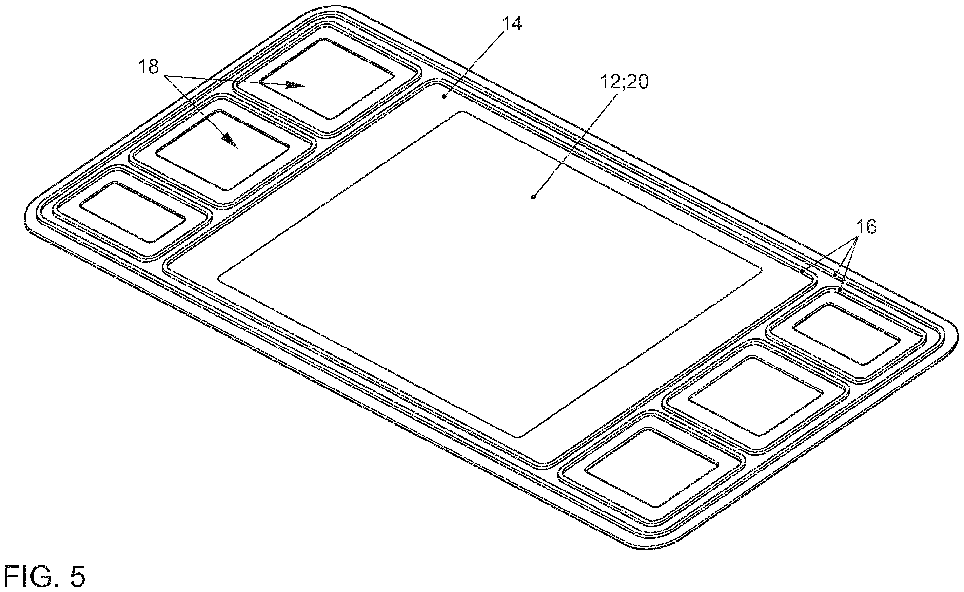

Als nächster Schritt erfolgt typischerweise ein Zusammenfügen des Dichtungsträgers 14 und der Membran-Elektroden-Einheit 12 - vergleiche Figur 5. Dazu wird die Membran-Elektroden-Einheit 12, im gezeigten Beispiel oberhalb des Dichtungsträgers 14 positioniert, wobei der in Figur 4 noch ersichtliche Öffnungsbereich 46 von der Membran-Elektroden-Einheit 12 verschlossen wird. Dabei überlappt die Membran 20 in ihren Randbereichen den Dichtungsträger 14.

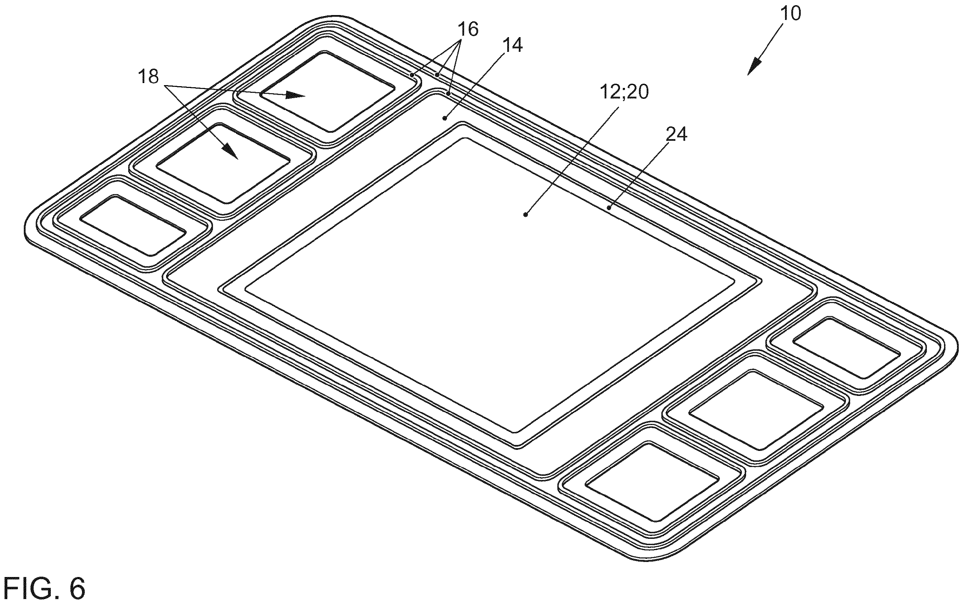

Figur 6 zeigt die Membran-Elektroden-Anordnung 10 nach einem weiteren Herstellungsschritt. Dabei wird die Verbindungslage 24 (Kleberahmen), z. B. eine selbstklebende Folie, in der gezeigten Rahmenform auf die Membran-Elektroden-Einheit 12 und den Dichtungsträger 14 mit diesen überlappend geklebt.

Alternativ kann der Dichtungsträger 14 auch durch ein Aufbringen eines Klebstoffs (auf den Dichtungsträger 14 und/oder die Membran-Elektroden-Einheit 12, z. B. deren Membran 20) im, mit der Membran 20 überlappenden Randbereich mit der Membran-Elektroden-Einheit 12 direkt verklebt werden. Zur Realisierung dieser Variante bedarf es jedoch eines relativ aufwändigen Schritts des Aufbringens des Klebstoffs auf den jeweiligen Randbereich. Deshalb wird ein Verkleben mittels der Verbindungslage 24 bevorzugt.

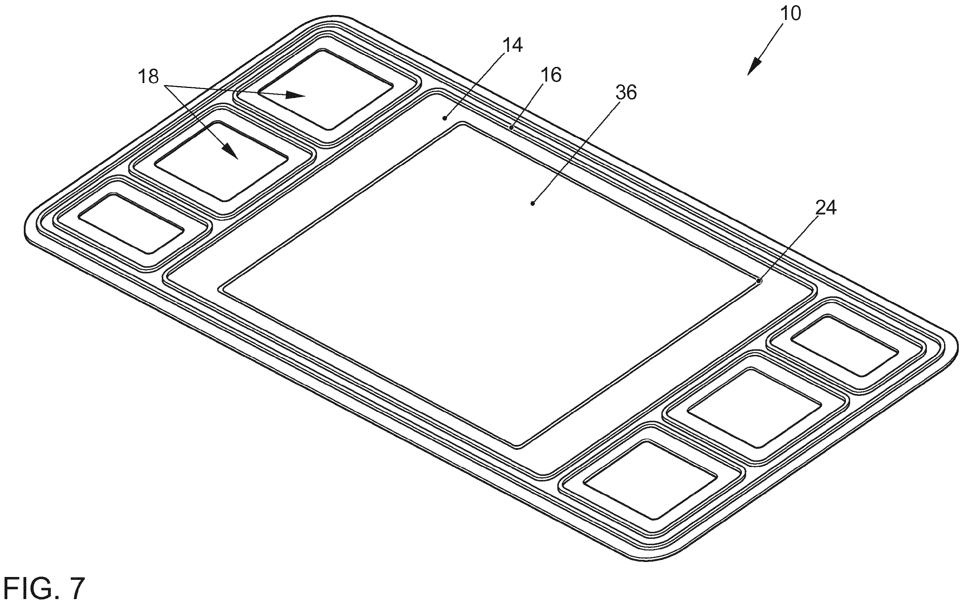

In einem abschließenden Schritt können noch die Gasdiffusionslagen 36 beidseitig der Membran-Elektroden-Einheit 12 aufgeklebt oder auflaminiert werden. In Figur 7 ist die Membran-Elektroden-Anordnung 10 nach diesem Schritt gezeigt.

Eine Befestigung der Membran 20 erfolgt somit auf dem Dichtungsträger 14 (also einer einzigen Lage Randverstärkung), welche bereits mit der Dichtung 16 versehen ist, durch Aufbringen der Verbindungslage 24 (typischerweise ein Kleberahmen).

Durch die Erfindung erfolgt ein Verbinden der Dichtung 16 mit dem Dichtungsträger 14, also typischerweise ein Anspritzen der Dichtung 16 an den Dichtungsträger 14 (oder auch ein Umspritzen des Dichtungsträgers 14 mit der Dichtung 16) bereits vor dem Verbinden des Dichtungsträgers 14 mit der Membran 20. Gleichzeitig erfolgt dieses Verbinden des Dichtungsträgers 14 mit der Membran 20 auf denkbar einfache Weise mittels der Verbindungslage 24. Durch das nachträgliche Montieren der Membran-Elektroden-Einheit 12 reduzieren sich die Ausschusskosten und verkürzen sich die Prozesszeiten beim Anspritzen der Dichtung 16.

Durch die einseitige Verklebung wird eine stabile Membran-Elektroden-Anordnung 10 erzielt, welche kostengünstiger und prozesssicherer herstellbar ist.

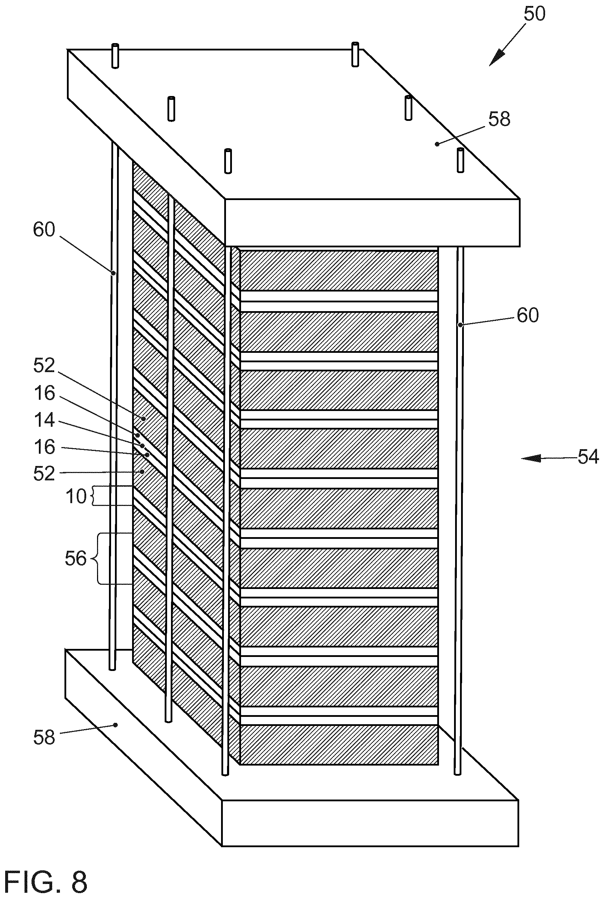

Figur 8 zeigt in einer schematischen Darstellung eine Brennstoffzelle 50 umfassend mehrere erfindungsgemäße Membran-Elektroden-Anordnungen 10. Die Membran-Elektroden-Anordnungen 10 sind alternierend mit Bipolarplatten 52 zu einem Brennstoffzellenstapel 54 mit mehreren Einzelzellen 56 gestapelt.

Die Bipolarplatten 52 versorgen die Membran-Elektroden-Einheiten 12 der Membran-Elektroden-Anordnungen 10 über die Gasdiffusionslagen 36 mit den Reaktanten, wozu in der Regel geeignete Kanäle in den Bipolarplatten 52 vorgesehen sind. Zudem verbinden die Bipolarplatten 52 zwei angrenzende Membran-Elektroden-Einheiten 12 elektrisch leitfähig, wodurch diese in Reihe geschaltet sind. Die beiden endständigen Bipolarplatten werden auch als Monopolarplatten bezeichnet, da diese nur einseitig die anschließende Membran-Elektroden-Einheit 12 versorgen und zu diesem Zweck nur auf einer ihrer Seiten über entsprechende Kanäle verfügen.

Die Dichtungen 16 der Membran-Elektroden-Anordnungen 10 dichten die Räume zwischen den Membran-Elektroden-Einheiten 12 und den Bipolarplatten 52 nach außen ab und ein verhindern somit ein Austreten der Betriebsmedien aus dem Brennstoffzellenstapel 54 während des Betriebs der Brennstoffzelle 50.

Um eine Funktionsfähigkeit der Dichtungen 16, sowie einen elektrisch leitfähigen Kontakt der Bipolarplatten 52 zu den Membran-Elektroden-Einheiten 12 auch bei Vibrationen (z. B. durch eine Verwendung in einem Kraftfahrzeug) zu gewährleisten, wird der Brennstoffzellenstapel 54 typischerweise verpresst. Dies erfolgt in der Regel über zwei Endplatten 58, welche an beiden Enden des Brennstoffzellenstapels 54 angeordnet sind, in Kombination mit mehreren Zugelementen 60. Die Zugelemente 60 leiten Zugkräfte in die Endplatten 58, sodass die Endplatten 58 den Brennstoffzellenstapel 54 zusammenpressen.

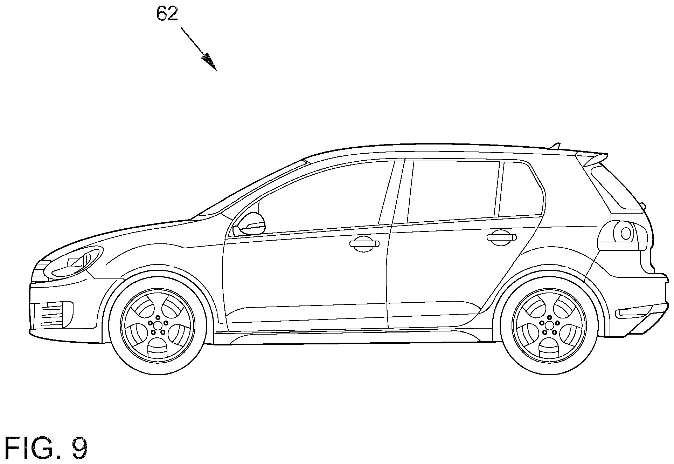

Figur 9 zeigt ein Kraftfahrzeug 62 umfassend die Brennstoffzelle 50. Die Brennstoffzelle 50 stellt während des Betriebs des Kraftfahrzeugs 62 elektrische Energie, typischerweise für ein elektrisches Antriebssystem des Kraftfahrzeugs 62 zur Verfügung.

### Bezugszeichenliste

- 10: Membran-Elektroden-Anordnung
- 12: Membran-Elektroden-Einheit (MEA)
- 14: Dichtungsträger
- 16: Dichtung
- 18: Öffnung zur Durchführung von Betriebsmedien
- 20: Membran
- 22: Elektroden
- 24: Verbindungslage
- 26: chemisch aktiver Bereich
- 28: innerer Randabschnitt der Verbindungslage
- 30: äußerer Randabschnitt der Verbindungslage
- 32: innerer Rand der Verbindungslage
- 34: innerer Rand des Dichtungsträgers
- 36: Gasdiffusionslage
- 38: erster Teilabschnitt der Dichtung
- 40: zweiter Teilabschnitt der Dichtung
- 42: Dichtlippe
- 44: Dichtfläche
- 46: Öffnungsbereich
- 48: Perforation
- 50: Brennstoffzelle
- 52: Bipolarplatte
- 54: Brennstoffzellenstapel
- 56: Einzelzelle
- 58: Endplatte
- 60: Zugelement
- 62: Kraftfahrzeug

## Patentansprüche

1. Membran-Elektroden-Anordnung (10) für eine Brennstoffzelle (50), umfassend
- eine Membran-Elektroden-Einheit (12) mit
- einer Membran (20) und
- zwei, die Membran (20) beidseitig flächig kontaktierenden Elektroden (22);
- einem, die Membran (20) umlaufend umschließenden und mit dieser überlappenden Dichtungsträger (14),
- einer Verbindungslage (24), welche mit der Membran (20) und mit dem Dichtungsträger (14) umlaufend überlappt, wobei auf derselben Flachseite der Verbindungslage (24) ein innerer Randabschnitt (28) der Verbindungslage (24) mit der Membran-Elektroden-Einheit (12) und ein äußerer Randabschnitt (30) der Verbindungslage (24) mit dem Dichtungsträger (14) stoffschlüssig verbunden ist, sowie
- eine, außerhalb der Membran (20) mit dem Dichtungsträger (14) verbundene Dichtung (16),
**dadurch gekennzeichnet, dass**
- die stoffschlüssige Verbindung eine Klebung ist, wobei die Verbindungslage (24) mit einem Klebstoff beschichtet ist.

2. Membran-Elektroden-Anordnung nach Anspruch 1, wobei die Verbindungslage (24) auf einer, dem Dichtungsträger (14) gegenüberliegenden Flachseite der Membran (20) angeordnet ist.

3. Membran-Elektroden-Anordnung nach einem der vorhergehenden Ansprüche, wobei die Verbindungslage (24) eine selbstklebende Folie ist.

4. Membran-Elektroden-Anordnung nach einem der vorhergehenden Ansprüche, wobei ein innerer Rand (32) der Verbindungslage (24) gegenüber einem inneren Rand (34) des Dichtungsträgers (14) mit einem Versatz endet, insbesondere übersteht.

5. Membran-Elektroden-Anordnung nach einem der vorhergehenden Ansprüche, wobei der Dichtungsträger (14) eine Perforation (48) aufweist, entlang welcher sich die Dichtung (16) beidseitig des Dichtungsträgers (14) erstreckt, wobei ein erster Teilabschnitt (38) der Dichtung (16) auf einer ersten Flachseite und ein zweiter Teilabschnitt (40) auf einer zweiten Flachseite des Dichtungsträgers (14) angeordnet sind und die beiden Teilabschnitte (38, 40) durch die Perforation (48) hindurch einstückig miteinander verbunden sind.

6. Brennstoffzelle (50) umfassend eine Mehrzahl abwechselnd gestapelter Bipolarplatten (52) und Membran-Elektroden-Anordnungen (10) nach einem der vorhergehenden Ansprüche.

7. Kraftfahrzeug (62) umfassend eine Brennstoffzelle (10) nach Anspruch 6.

8. Verfahren zur Herstellung einer Membran-Elektroden-Anordnung (12) nach einem der Ansprüche 1 bis 5, umfassend die Schritte:
- Herstellen der Dichtung (16) im Bereich des Dichtungsträgers (14),
- anschließend stoffschlüssiges Verbinden des inneren Randabschnitts (28) der Verbindungslage (24) mit der Membran-Elektroden-Einheit (12) und des äußeren Randabschnitts (30) der Verbindungslage (24) mit dem Dichtungsträger (14).

9. Verfahren nach Anspruch 8, wobei das Herstellen der Dichtung (16) mittels Anspritzens der Dichtung (16) an den Dichtungsträger (14) realisiert ist.

## Claims

1. Membrane electrode assembly (10) for a fuel cell (50) comprising
- a membrane electrode unit (12) having
- a membrane (20) and
- two electrodes (22) which make contact with the membrane (20) in a planar fashion on both sides;
- a seal carrier (14) which circumferentially surrounds the membrane (20) and overlaps therewith,
- a connecting layer (24) which circumferentially overlaps with the membrane (20) and with the seal carrier (14), wherein on the same flat side of the connecting layer (24) an inner edge section (28) of the connecting layer (24) is connected in a materially joined fashion to the membrane electrode unit (12) and an outer edge section (30) of the connecting layer (24) is connected in a materially joined fashion to the seal carrier (14), and
- a seal (16) which is connected to the seal carrier (14) outside the membrane (20),
**characterized in that**
- the materially joined connection is a bonded connection, wherein the connecting layer (24) is coated with a bonding agent.

2. Membrane electrode assembly according to Claim 1, wherein the connecting layer (24) is arranged on a flat side of the membrane (20) lying opposite the seal carrier (14).

3. Membrane electrode assembly according to one of the preceding claims, wherein the connection layer (24) is a self-adhesive film.

4. Membrane electrode assembly according to one of the preceding claims, wherein an inner edge (32) of the connecting layer (24) ends, in particular protrudes, with an offset with respect to an inner edge (34) of the seal carrier (14).

5. Membrane electrode assembly according to one of the preceding claims, wherein the seal carrier (14) has a perforation (48), along which the seal (16) extends on both sides of the seal carrier (14), wherein a first partial section (38) of the seal (16) is arranged on a first flat side, and a second partial section (40) is arranged on a second flat side, of the seal carrier (14), and the two partial sections (38, 40) are connected integrally to one another through the perforation (48).

6. Fuel cell (50) comprising a multiplicity of alternately stacked bipolar plates (52) and membrane electrode assemblies (10) according to one of the preceding claims,

7. Motor vehicle (62) comprising a fuel cell (10) according to Claim 6.

8. Method for manufacturing a membrane electrode assembly (12) according to one of Claims 1 to 5, comprising the steps:
- manufacturing the seal (16) in the region of the seal carrier (14),
- subsequently connecting of the inner edge section (28) of the connecting layer (24) to the membrane electrode unit (12) and of the outer edge section (30) of the connecting layer (24) to the seal carrier (14) in a materially joining way.

9. Method according to Claim 8, wherein the manufacture of the seal (16) is implemented by injection moulding of the seal (16) onto the seal carrier (14).

## Revendications

1. Ensemble membrane-électrodes (10) pour une pile à combustible (50), comprenant
- une unité membrane-électrodes (12) comportant
- une membrane (20) et
- deux électrodes (22) qui viennent en contact à plat des deux côtés avec la membrane (20) ;
- un porte-joint d'étanchéité (14) qui entoure la membrane (20) sur sa périphérie et chevauche celle-ci,
- une couche de liaison (24) qui chevauche la membrane (20) ainsi que le porte-joint d'étanchéité (14) sur la périphérie, une portion de bordure intérieure (28) de la couche de liaison (24) étant reliée par fusion de matières avec l'unité membrane-électrodes (12) et une portion de bordure extérieure (30) de la couche de liaison (24) avec le porte-joint d'étanchéité (14) sur le même côté plat de la couche de liaison (24), et aussi
- un joint d'étanchéité (16) relié au porte-joint d'étanchéité (14) à l'extérieur de la membrane (20),
**caractérisé en ce que**
- la liaison par fusion de matières étant un collage, la couche de liaison (24) étant enduite d'un adhésif.

2. Ensemble membrane-électrodes selon la revendication 1, la couche de liaison (24) étant disposée sur un côté plat de la membrane (20) à l'opposé du porte-joint d'étanchéité (14).

3. Ensemble membrane-électrodes selon l'une des revendications précédentes, la couche de liaison (24) étant un film autocollant.

4. Ensemble membrane-électrodes selon l'une des revendications précédentes, un bord intérieur (32) de la couche de liaison (24) se terminant avec un décalage par rapport à un bord intérieur (34) du porte-joint d'étanchéité (14), notamment en saillie.

5. Ensemble membrane-électrodes selon l'une des revendications précédentes, le porte-joint d'étanchéité (14) possédant une perforation (48) le long de laquelle le joint d'étanchéité (16) s'étend des deux côtés du porte-joint d'étanchéité (14), une première portion partielle (38) du joint d'étanchéité (16) étant disposée sur un premier côté plat et une deuxième portion partielle (40) sur un deuxième côté plat du porte-joint d'étanchéité (14), et les deux portions partielles (38, 40) étant reliées l'une à l'autre d'un seul tenant à travers la perforation (48).

6. Pile à combustible (50) comprenant une pluralité de plaques bipolaires (52) et d'ensembles membrane-électrodes (10) selon l'une des revendications précédentes empilés en alternance.

7. Véhicule automobile (62) comprenant une pile à combustible (10) selon la revendication 6.

8. Procédé de fabrication d'un ensemble membrane-électrodes selon (12) l'une des revendications 1 à 5, comprenant les étapes :
- fabrication du joint d'étanchéité (16) dans la zone du porte-joint d'étanchéité (14),
- ensuite liaison par fusion de matières de la portion de bordure intérieure (28) de la couche de liaison (24) avec l'unité membrane-électrodes (12) et de la portion de bordure extérieure (30) de la couche de liaison (24) avec le porte-joint d'étanchéité (14).

9. Procédé selon la revendication 8, la fabrication du joint d'étanchéité (16) étant réalisée par pulvérisation du joint d'étanchéité (16) sur le porte-joint d'étanchéité (14).
